# EUROPEAN PATENT SPECIFICATION

(11) **EP 0 193 780 B1**
(45) Date of publication and mention of the grant of the patent: **07.04.1993**
(21) Application number: 86102006.3
(22) Date of filing: 17.02.1986
(51) Int. Cl.: G02B 6/44

(54) **Submarine cable for optical-fibres telecommunications**
Unterwasserkabel für faseroptische Nachrichtenübertragung
Câble sous-marin pour télécommunications par fibres optiques

(30) Priority: 26.02.1985 IT 1965585
(43) Date of publication of application: 10.09.1986
(73) Proprietor: PIRELLI CAVI S.p.A., 20123 Milano (IT)
(72) Inventor: Gazzana Priaroggia, Paolo, Milan (IT)
(74) Representative: Giannesi, Pier Giovanni

(56) References cited:
- FR-A- 2 435 051
- FR-A- 2 444 282
- GB-A- 1 422 956
- GB-A- 2 021 282
- GB-A- 2 064 811
- GB-A- 2 157 847
- GB-A- 2 157 848
- US-A- 4 365 865
- PATENT ABSTRACTS OF JAPAN, vol. 7, no. 15 (P-169)[1160], 21st January 1983; & JP-A-57 169 703

## Description

The present invention refers to a submarine cable - for optical-fibres telecommunications, that is particularly suited far being laid and operated even at deep sea levels.

Submarine optical-fibres telecommunications cables are subjected to high mechanical stresses but - owing to their fragility, the optical-fibres contained inside them, have to be protected from undergoing even the slightest stresses.

In fact, not only can optical-fibres break easily - but even the very slightest mechanical stresses imparted to them, can cause an attenuation of the signals transmitted.

Should any of the above events take place, it would signify putting the cable out of use.

The main factors causing mechanical stresses - in submarine cables that are used for optical-fibres telecommunications, are as follows:
- The ambient, wherein the cable is operated, which gives rise to stresses in them - due to the hydrostatic pressure that is exercised by the water. The stresses on the cable due to this factor, become increased - just as the laying-depth is increased for the cable.
- The laying operations that subject the cable to tensile stresses. These stresses increase whenever the laying depth becomes increased, owing to the greater weight in play, of the cable tract during this operation.
- The thermal variations to which the cable can be subjected during its transportation - from the factory to the site where it has to be layed, which cause mechanical stresses to be originated in the sheath - owing to the greater thermal expansion of the cable core, with respect to that of the sheath, as a result of the differences in the materials out of which said elements, in the known cables, are constructed.

For protecting these optical-fibres, the known submarine optical-fibres telecommunication cables have a structure which comprises a metallic sheath and a mechanically resistant strenght member (whose dimensions increase depending upon the laying-depth) which is placed around a core wherein the optical fibres are housed.

Known submarine optical-fibres telecommunications cables are, for example, those described in the U.K. PATENT No. 2021282, in the AUSTRALIAN PATENT APPLICATION No. 74.368/81, and in FR-A-2 435 051.

In known submarine optical-fibres telecommunications cables, the presence of a metallic sheath and of a mechanically resistent strenght member that is disposed so as to surround the cable-core, render these elements to be scarsely flexible, with further complicating the laying operations since these elements are, in sè, rigid as well as being distanced apart from the cable axis - which represents the neutral axis of flexion.

Moreover, when increasing the depth at which the cable is intended to be layed, the flexibility itself of the cable also decreases considerably - both, because the dimensions of the mechanically-resistent strenght member are increased - due to the greater applied stresses, as well as because the dimensions of said strengt member are increased - because they are obtained by placing mechanically-resistant material outside of the cable - and hence, in a position that is still further away from the neutral axis of flexion.

The aim of the present invention is to have optical-fibres telecommunications cables apt for being layed even at greater depths - for example, of over 1000 metres, with their having a greater flexibility compared to known cables and a reduced weight per length unit, thereby not being subject to damages when undergoing temperature variations - during their transportation, from the factory to the laying site.

What forms the object of the present invention is a submarine telecommunication optical fiber cable, that comprises a strenght member constituted by a rope (1), formed by a plurality of filiform elements (5) disposed in the radially innermost position of the cable, the axis (2) of said rope (1) coinciding with the cable axis, a plurality of tubes (3) loosely lodging optical fibers (4), helically wound around said rope (1), said tubes (3) being filled with a substantially incompressible liquid, at least one water-tight sheath (7) around said tubes (3) and said rope (1), characterized in that said tubes (3) and said rope (1) are completely embedded in said sheath or sheaths, in that a substantially incompressible liquid fills up any spaces (6) between the filioform elements (5), in that said rope (1) is a torsion balanced rope having a section which is not less than 50 mm² and being the only mechanically resistant strength member of the cable, and in that said sheath or sheaths (7) is made of plastics material.

The compact torsion balanced rope comprising the strenght member of a sub-marine cable according to the invention, is planned substantially for totally resisting tractional stresses during the laying operation and moreover, the cross-section of said rope is not less than 50 mm².

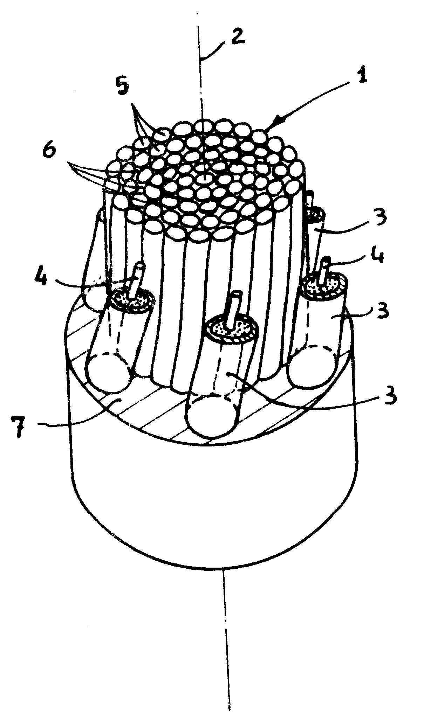

The present invention will be better understood through the aid of the following detailed description, made solely by way of non-limiting example, with referring to the figure in the attached drawing TABLE, which shows a perspective view of a length of cable according to the invention - with parts removed for better illustrating the cable structure.

As shown in the figure, the cable foresees a core comprising a strenght member 1, whose axis coincides with the longitudinal axis 2 of the cable, and a plurality of small tubes 3 - loosely housing the optical-fibres 4, wound helically and in direct contact with the strengh member 1, as shall be explained, more specifically, further on in the text.

The small tubes 3 - that are made, for example, of plastic, or even of other materials, are filled with a practically incompressible liquid - such as, for example, a petroleum jelly, or a silicone grease, and such-like.

The strenght member 1, that occupies the radially innermost zone of the cable is planned and hence, dimensioned for totally resisting tractional stresses that are imparted to the cable during the laying operation. Said armouring 1, is constituted by a compact torsion balanced rope - whose cross-section is not less than 50 mm², and it is formed by a plurality of filiform elements 5, made out of a material having a very high mechanical-resistance to tractions - such as, for example, steel, aromatic polyamides, carbon fibres, and such like. The interspaces 6, existing in-between the filiform elements 5, are filled up by a practically incompressible liquid - such as those previously specified.

The filiform elements 5 are disposed helically in coaxial overlapping layers, and the winding direction of the filiform elements in one layer, is preferably opposite to that of the filiform elements in the adjacent layers.

With such a disposition of the filiform elements 5, whenever the rope is subjected to tractions it does not undergo any torsion and hence, it presents a good flexibility.

As previously stated, the tubes 3 are wound helically in direct contact on the strenght member 1 - constituted by the previously described compact torsion balanced rope.

In particular, the helicoidally winding of the small tubes 3, can be as a closed-helix or an open-helix - meaning by this latter term that the lay-out, of each small tube, is comprised by alternating S-shaped and Z-shaped lengths.

Over the cable core that is constituted by the assembly of the strenght member 1 and the plurality of tubes 3, there is disposed a plastic sheath 7 - obtained through extrusion for example, that englobes the tubes 3, mating through its radially innermost surface, with the outermost surface of the assembly made by strenght member (1) and tubes (3).

In this manner, the radially innermost surface of the plastic sheath 7, has a form which is apt for complementing the outer surface of the strenght member (1)-tubes(3) assembly - and because of this, no voids exist in the material between said plastic sheath and said assembly.

For forming the sheath 7, there can be used, for example, polyolefins - such as polyethylene and polypropylene, aliphatic polyamids and such like. Preferably, the sheath 7 is made of an aliphatic polyamid - because said material renders the sheath to be radially less contractile under the action of hydrostatic pressure. In this way there is prevented, along the cable, any consequent minimum variations in the diametral dimensions of the tubes and the longitudinal movements of the incompressible liquid filling the tubes that are due to this cause.

Over the plastic sheath 7, there can be foreseen other elements (not shown in the figure) - such as, for example, anti-shipworm protections of the per se known type, through eventually winding good electrical conductor metallic tapes - either insulated or not. But, in practice, none of these elements should form, through their presence, either a continuous, watertight metallic-sheath, or a mechanically resistant strenght member for the cable.

In this way, a cable according to the invention is devoid of any whatsoever continuous watertight metallic-sheath and of any whatsoever strenght member, mechanically-resistent to stresses, that is disposed radially outside the cable core and so as to surrounding the zone where the optical-fibres are housed.

As an alternative variation (not shown) of a cable according to the invention, the strenght member is clad by a plastic covering layer that adheres to it closely without allowing for any interspaces, that is made, for example, out of a polyolefin - such as polyethylene, polypropylene, of an aliphatic polyamid and such like.

The tubes - filled with an incompressible liquid, in which the optical-fibres are loosely housed, are wound in direct contact with the above-cited covering layer. In this case, the plastic sheath of the cable has its radially innermost surface of a form that complements the outer surface of the assembly made by the covering layer and tubes.

According to another alternative embodiment for cables, according to the invention, the strenght member constituted by a compact torsion balanced rope, comprises a longitudinal metallic element of a high electrical conductibility, such as to originate an electric conductor for allowing the feeding of the optoelectronic repeaters for the signals transmitted by the optical-fibres that are disposed along the cable.

For example, the longitudinal metallic element having a high electrical conductibility, is constituted by at least one combined copper wire - for example, incorporated or wound around the compact torsion balanced rope. The return conductor can be the sea.

As an alternative, the return conductor may be comprised by a combination of the sea and of a good electrical conductor metallic tape wound around the sheath, or by a metallic tape embedded in the latter.

According to a further variation - valid for the case where no longitudinal metallic element having a high electrical conductibility is connected to the cable strenght member, the feeding of the optoelectronic repeaters can be obtained through an electric circuit comprising a good electrical conductor metallic insulated tape wound around the sheath, with utilizing the sea as a return conductor.

It should be understood however, that no matter what the configuration may be, of the good electrical conductor metallic tapes provided around, or inside the sheath, they must neither originate a watertight metallic sheath, nor a mechanically-resistent strenght member for the cable.

From the above-given description and from the following considerations it can be understood that through the cables according to the invention, the proposed aims can be achieved.

In the submarine optical-fibres telecommuncations cables according to the invention, no metallic mechanically resistent elements are to be found around the core wherein the optical-fibres are disposed.

In fact, the mechanically resistent strenght member is disposed in the innermost zone of the cable, near to its axis, and the sheath is made of a plastic - and not of a metallic material as is found in the known submarine cables.

As a consequence, the flexibility of the cables according to the invention, results as being greater than in the known cables - both, because the mechanically-resistent strenght member is disposed exclusively near to the longitudinal axis of the cable which is the neutral axis of flexion and also because the plastic sheath is more flexible than a metallic sheath.
In this manner, there is obtained a reduction in weight per length unit of the cable, as with respect to known cables.

Moreover, even in the absence of a watertight sheath and of a mechanically-resistent strenght member around the sheath wherein the optical-fibres are disposed, no risks are to be feared of the cable structure collapsing under the action of hydrostatic pressure, even at great sea depths.

In fact, the resistence to hydrostatic pressure of the cables according to the invention, is ensured by the fact of no spaces, void of material, are found in the cable structure - seeing that both, the interspaces existing between the filiform elements of the rope that forms the mechanically resistent strenght member as well as the tubes housing the optical-fibres, are all filled with a practically incompressible liquid. Moreover, the radially innermost surface of the plastic sheath adheres perfectly to the cable core, without leaving any interstices.

Moreover, the absence of any mechanically-resistant strenght member around the cable core, eliminates the danger which exists in the known cables - in that it can exercise compressions on the cable core and hence, cause stresses in the optical-fibres when, during the laying operation, said strenght member tends to grip the core, due to the effects of the tensile stresses imposed on it.

In the cables according to the invention, the sheath is made of plastic and not of a metallic material, as is in the case of the known submarine optical-fibres cables.

In these latter, the presence to-date, has been held indispensable of a continuous watertight metallic sheath for surrounding the zone occupied by the optical-fibres, in order to prevent even the minimum traces of water from penetrating into the cable and reaching the optical-fibres, with resulting in attenuations of the transmitted signals, as well as embrittlements.

In the cables according to the invention, in spite of the presence of a plastic sheath - which cannot guarantee an impermeability equal to that of a watertight metallic sheath, there are not, in practice, verified any of the drawbacks feared for the optical-fibres.

In the cables according to the invention, the elimination of the metallic sheath - which is substituted by a plastic sheath, renders the cables to be free from the risks resulting from the temperature variations to which a cable can be subjected - during its transportation, from the manufacturing zone to the cable-laying area.

In fact - and as compared to a metallic sheath, a plastic sheath has a greater possibility for expansion. Therefore, owing to this expansibility of a plastic sheath, there are no dangers of ruptures or of crackings to be feared - which could be verified with the metallic sheaths, whenever the thermal expansions of the elements, enclosed inside the sheath, are caused by any whatsoever possible temperature increase that can take place due to a direct exposure of the cables to the sun.

Although only certain forms of realization, for the cables according to the invention, have been illustrated and described, what are also intended as being comprised within the scope of the invention are all those possible alternative variations of the inventive idea that are accessible to anyone skilled in the art.

## Claims

1. A submarine telecommunication optical fiber cable, that comprises a strenght member constituted by a rope (1), formed by a plurality of filiform elements (5) disposed in the radially innermost position of the cable, the axis (2) of said rope (1) coinciding with the cable axis, a plurality of tubes (3) loosely lodging optical fibers (4), helically wound around said rope (1), said tubes (3) being filled with a substantially incompressible liquid, at least one water-tight sheath (7) around said tubes (3) and said rope (1), characterized in that said tubes (3) and said rope (1) are completely embedded in said sheath or sheaths, in that a substantially incompressible liquid fills up any spaces (6) between the filioform elements (5), in that said rope (1) is a torsion balanced rope having a section which is not less than 50 mm² and being the only mechanically resistant strength member of the cable, and in that said sheath or sheaths (7) is made of plastics material.

2. A submarine telecommunication optical fiber cable according to claim 1 characterized in that the rope (1) is clad by a first sheath that adheres closely to the rope without allowing any voids or interspaces between said first sheath and the rope and in that the cable has a second sheath (7) having its radially innermost surface of such a shape as to complement the outer surface of the tubes and of said first sheath,

3. A submarine telecommunication optical fiber cable according to claims 1 and 2, characterized in that the plastic sheath (7) of the cable is of a plastics material selected from the groups of polyolefins and the aliphatic polyamides.

4. A submarine telecommunication optical fiber cable according to claim 1, characterized in that the rope (1) comprises a longitudinal metallic element having a high electrical conductivity.

5. A submarine telecommunication optical fiber cable, according to claim 4, characterized in that said longitudinal metallic element having a high electrical conductivity is constituted by at least one copper wire embedded in said rope.

## Patentansprüche

1. Unterwasserkabel für faseroptische Nachrichtenübertragung, umfassend einen Festigkeitsteil, der aus einem Seil (1) dargestellt ist, welches aus einer Mehrzahl von fadenartigen Elementen (5) gebildet ist, die in der radial innersten Position des Kabels angeordnet sind, wobei die Achse (2) des Seiles (1) mit der Kabelachse übereinstimmt, eine Mehrzahl von Rohren oder Schläuchen (3), welche optische Fasern (4) lose aufnehmen und schraubenlinienförmig um das Seil (1) gewickelt sowie mit einer im wesentlichen inkompressiblen Flüssigkeit gefüllt sind, und wenigstens einen wasserdichten Mantel (7) rund um die Rohre oder Schläuche (3) und das Seil (1),
dadurch gekennzeichnet,
daß die Rohre oder Schläuche (3) und das Seil (1) in den Mantel bzw. in die Mäntel vollständig eingebettet sind, daß eine im wesentlichen inkompressible Flüssigkeit irgendwelche Räume (6) zwischen den fadenartigen Elementen (5) ausfüllt, daß das Seil (1) ein drehungsausbalanciertes Seil ist mit einem Querschnitt, der nicht kleiner als 50 mm² ist sowie der einzige mechanisch wiederstandsfähige Festigkeitsteil des Kabels ist, und daß der Mantel bzw. die Mäntel (7) aus Kunststoffmaterial gebildet sind.

2. Unterwasserkabel für faseroptische Nachrichtenübertragung nach Anspruch 1,
dadurch gekennzeichnet,
daß das Seil (1) mit einem ersten Mantel bekleidet ist, der an dem Seil eng haftet, ohne irgendwelche Leerräume oder Zwischenräume zwischen dem ersten Mantel und dem Seil zu ermöglichen, und daß das Kabel einen zweiten Mantel (7) hat, dessen radial innere Fläche eine solche Gestalt hat, daß die Außenfläche der Rohre oder Schläuche und des ersten Mantels komplementiert ist.

3. Unterwasserkabel für faseroptische Nachrichtenübertragung nach Anspruch 1 und 2,
dadurch gekennzeichnet,
daß der Kunststoffmantel (7) des Kabels aus einem Kunststoffmaterial gebildet ist, welches aus den Gruppen von Polyolefinen und den aliphatischen Polyamiden ausgewählt ist.

4. Unterwasserkabel für faseroptische Nachrichtenübertragung nach Anspruch 1,
dadurch gekennzeichnet,
daß das Seil (1) ein langgestrecktes Metallelement aufweist, welche hohe elektrische Leitfähigkeit hat.

5. Unterwasserkabel für faseroptische Nachrichtenübertragung nach Anspruch 4,
dadurch gekennzeichnet,
daß das langgestreckte Metallelement, welches hohe elektrische Leitfähigkeit hat, durch wenigstens einen Kupferdraht dargestellt ist, der in das Seil eingebettet ist.

## Revendications

1. Un câble de télécommunications sous-marines à fibres optiques qui comprend un organe de résistance consistant en une corde (1), formée de plusieurs éléments filiformes (5) disposés dans la position radialement interne du câble, l'axe (2) de ladite corde (1) coïncidant avec l'axe du câble, plusieurs tubes (3) logeant de façon lâche des fibres optiques (4), enroulés en hélice autour de ladite corde (1), lesdits tubes (3) étant remplis d'un liquide sensiblement incompressible, au moins une gaine étanche à l'eau (7) autour desdits tubes (3) et de ladite corde (1), caractérisé en ce que lesdits tubes (3) et ladite corde (1) sont complètement encastrés dans ladite gaine ou lesdites gaines, en ce qu'un liquide sensiblement incompressible remplit tous les espaces (6) entre les éléments filiformes (5), en ce que ladite corde (1) est une corde équilibrée en torsion dont la section transversale n'est pas inférieure à 50 mm² et qui est le seul organe mécaniquement résistant du câble, et en ce que ladite gaine ou lesdites gaines (7) est ou sont en une matière plastique.

2. Un câble de télécommunications sous-marines à fibres optiques selon la revendication 1, caractérisé en ce que la corde (1) est revêtue d'une première gaine qui adhère de façon étroite à la corde sans permettre de vides ni d'espaces intermédiaires entre ladite première gaine et la corde et en ce que le câble comprend une deuxième gaine (7) dont la surface radialement intérieure est d'une forme telle qu'elle forme le complément de la surface extérieure des tubes et de ladite première gaine.

3. Un câble de télécommunications sous-marines à fibres optiques selon la revendication 1 ou 2, caractérisé en ce que la gaine plastique (7) du câble est en une matière plastique choisie parmi le groupe des polyoléfines et des polyamides aliphatiques.

4. Un câble de télécommunications sous-marines à fibres optiques selon la revendication 1, caractérisé en ce que la corde (1) comprend un élément métallique longitudinal à conductivité électrique élevée.

5. Un câble de télécommunications sous-marines à libres optiques selon la revendication 4, caractérisé en ce que ledit élément métallique longitudinal à conductivité électrique élevée est constitué par au moins un fil de cuivre encastré dans ladite corde.
